# EUROPEAN PATENT SPECIFICATION

(11) **EP 1 477 893 B1**
(45) Date of publication and mention of the grant of the patent: **16.09.2015**
(21) Application number: 03078285.8
(22) Date of filing: 17.10.2003
(51) Int. Cl.: G06F 9/44

(54) **Method for inputting data in a computer system.**
Verfahren zur Dateneingabe in einem Rechnersystem
Procédé pour entrer des données dans un système d'ordinateur

(30) Priority: 16.05.2003 EP 03011203
(43) Date of publication of application: 17.11.2004
(73) Proprietor: SAP SE, 69190 Walldorf (DE)
(72) Inventor: Hatscher, Michael, 49080 Osnabrück (DE); Beringer, Joerg, 60431 Frankfurt (DE)
(74) Representative: Müller-Boré & Partner Patentanwälte PartG mbB

(56) References cited:
- EP-A2- 0 982 669
- US-A- 5 546 521
- US-A- 5 862 379
- US-A- 6 014 138

## Description

The invention relates to a computer system, a method for inputting data in a computer system, a computer program product and an article of manufacture.

In the art, a computer system is known which, when running a computer program, has a user-interface comprising a graphical program interface which is part of the running computer program. The graphical program interface has one or more input controls by means of which a user can input data into the computer system. In this prior art computer system, the user-interface also has a control by means of which user can open another graphical interface, a so called context sensitive menu, outside the graphical program interface, which also referred to in the art as a 'pop-up menu'. In the pop-up menu, information about the selected input control may be shown or data may be presented to the user which is suitable to be inserted at a selected input control. This prior-art pop-up menu is also known in the art as a 'context-sensitive' menu, because information relating to the selected input control or data suitable to be input at the selected input control is shown.

However, a draw-back of this prior art computer system is that the pop-up menu is inconvenient because the pop-up menu inhibits the user from using the program interface, i.e. the user cannot use the program interface unless he closes the pop-up menu. Furthermore, the pop-up menu is inconvenient because the pop-up menu may obscure a part of the graphical program interface, especially if a large amount of data is suitable to be inserted at the input control and the pop-up menu has relatively large dimensions. Even more inconvenient, the pop-up menu may obscure the input control, which prevents the user from viewing the input control and thus prevents the user from determining what type of data should be inserted at the input control.

EP 0 982 669 A2 discloses a computer operated apparatus for generating a visual information system. A virtual world associated with an application is built using building blocks such as scenes, data sources, global parameters, and resources. A scene is a visual display of information much like a presentation slide, except that the information may be linked to data stored in a database or other data storage systems. Within a scene, values resulting from a data source are represented graphically as user-defined data elements. Data sources are built with a block diagramming tool which generates one or more database queries. The queries may be SQL queries. Scenes are created with a drawing editor which transparently binds data sources to the graphical elements of the scenes. When the virtual world is completed, an execution image of the virtual world may be represented as byte code. The byte code representing the virtual world may be executed by a runtime control to provide desired information to users.

It is a goal of the invention to provide a computer system with an increased ease of use. The invention therefore provides a computer system according to claim 1 and a method for inputting data in a computer system having the features of claim 4. Preferred embodiments of the invention are defined in the dependent claims.

Such a computer system has an increased ease of use because the graphical selection interface is part of the graphical program interface. Thus, the graphical selection interface does not inhibit a user to use other parts of the graphical program interface, e.g. the selected input control or otherwise, and an user may use other parts of the graphical program interface without being obliged to close the graphical selection interface. Furthermore, the graphical selection interface is part of the graphical program interface. Thereby, the graphical selection interface may be arranged such that it does not obscure the other parts of the graphical program interface and the ease of use is increased even further.

The invention further provides a method according to claim 4. In such a method, the ease of use is increased because the graphical selection interface is part of the graphical program interface. Thus, the graphical selection interface is not acting as an inhibiter which prevents an user from using other parts of the graphical program interface. Furthermore, the graphical selection interface is part of the graphical program interface. Thereby, the graphical selection interface may be arranged such that it does not obscure parts of the graphical program interface, e.g. the selected input control or otherwise, whereby the ease of use is increased further.

The invention also provides a computer program product according to claim 5 and an article of manufacture according to claim 6.

Specific embodiments of the invention are set forth in the dependent claims. Further details, aspects, and embodiments of the invention will be described, by way of example only, with reference to the drawings.
Fig. 1 schematically shows an example of an embodiment of a computer system according to the invention.
Figs.2-3 schematically show an example of an embodiment of a graphical user-interface suitable for use in the example of fig. 1.

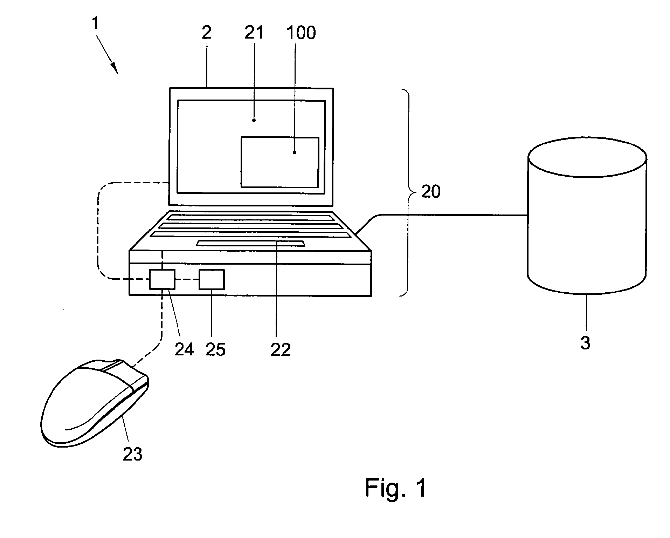

In fig. 1 a computer system 1 is shown which comprise a computer device 2. The computer system 1 further comprises a database 3 which may, for example, comprise information about persons working in a company, available rooms or otherwise. In the example of fig. 1, the computer device 2 and the database 3 are separate entities and the computer device 2 is communicatively connected to the database 3. However, the database may likewise be a part of the computer device 2.

Referring to figs. 1-3, the computer device 2 is provided with an user-interface (UI) 20, which in this example comprises an output interface, e.g. display 21, at which data can be outputted in a for humans perceptible form, in this example visually, to an user. The display 21 is also referred to as a graphical user interface (GUI). The user-interface 20 further comprises an input interface, e.g. keyboard 22 and mouse 23, at which the user can input data into the computer device 2.

Both the output interface and the input interface may comprise other components than those depicted in fig. 1, such as for example an electronic writing pad, acoustic output or input devices or otherwise. Furthermore the input and output interface may at least partially be integrated in the same device, such as in a touch screen or otherwise.

The computer system 2 further comprises a processor 24 which is communicatively connected to the display 21, the keyboard 22, the mouse 23 and a memory 25, as is indicated with the dashed lines in fig. 1. The processor 24 is arranged to handle input from the input interface, and output data at the display 21. The processor 2 4 may further be provided with other functionality, such as ability to handle data received or outputted to other device, manipulate data, run one or more computer programs stored in the memory 25 or otherwise.

In the example of figs. 1-3, actions performed by an user by means of the keyboard 22 and mouse 23 are graphically represented at the GUI by the computer system 1. Thus, in this example, when actions are said to be performed by a user at the GUI, the actions performed by means of the keyboard 22 and mouse 23, but graphically represented at the GUI. However, it is likewise possible to combine the GUI and the input interface, for example as a touch-screen or otherwise. In such case actions said to be performed by a user at the GUI both represented and performed at the GUI.

As shown in fig. 1, the user-interface 20 comprises a graphical program interface 100 which is a visual representation at the display 21 of (at least a part of) a computer program running on the computer system 2. The graphical program interface 100 may for example provide an user at a node in a computer network with access to resources on a server in the network. The graphical program interface 100 may for example be a graphical representation of a web-browser program which allows access to resources, such as applications, data and services of a computerised enterprise management system, such as is sold by SAP AG of Waldorf, Germany.

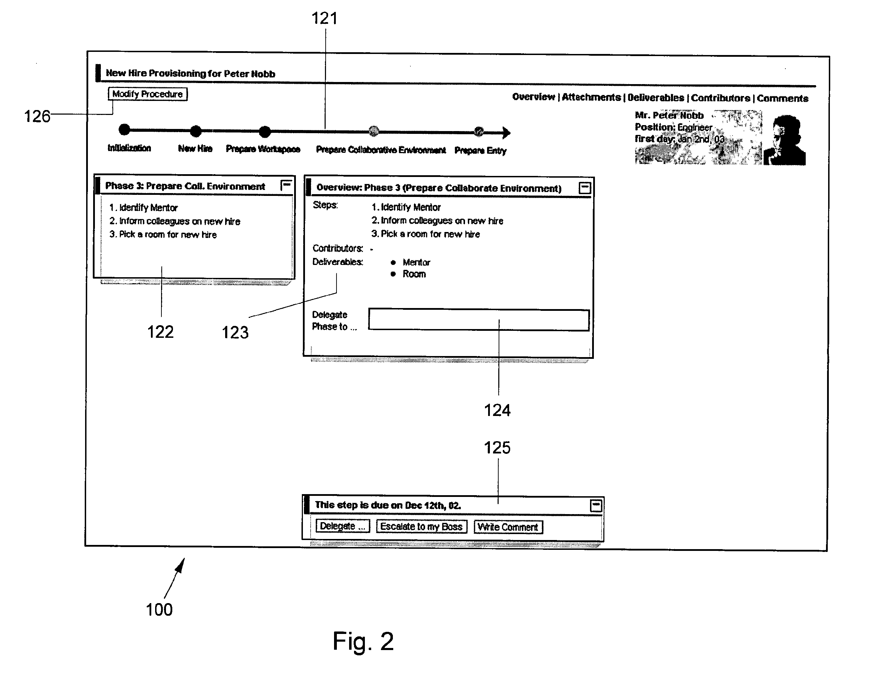

As shown in figs. 2-3, the graphical program interface 100 comprises several sub-interfaces 110, 122,124,125, as will be explained below in more detail. The sub-interface denoted with reference number 110 is a graphical selection interface. The graphical selection interface 110 can interact with one or more input controls in the graphical program interface 100, such as a delegate control 124 in the sub-interface 123.

In the example, the graphical selection interface 110 is part of the graphical program interface 100. An user can therefore use the graphical program interface 100 without closing the graphical selection interface 110. Accordingly, the computer system has an improved ease of use. Furthermore, the graphical selection interface 110 cannot obscure the graphical program interface 100 because it is a part thereof, which further improves the ease of use. In this example, the position of the graphical selection interface 110 is fixed with respect to the graphical program interface 100. However if so desired the graphical selection interface 110 may be implemented as movable within the graphical program interface 100.

As is illustrated in fig. 2 in a normal state the graphical selection interface 110 is not present at the graphical program interface 100, but when an input control in the graphical program interface 100 is activated by the user, for example by pointing with the mouse 23 to the input control and pressing a button 230 on the mouse 23, the graphical selection interface 110 is made visible in the graphical program interface 100 by the computer device 2. Thus, the graphical selection interface 110 is made visible when needed only and the ease of use is improved further.

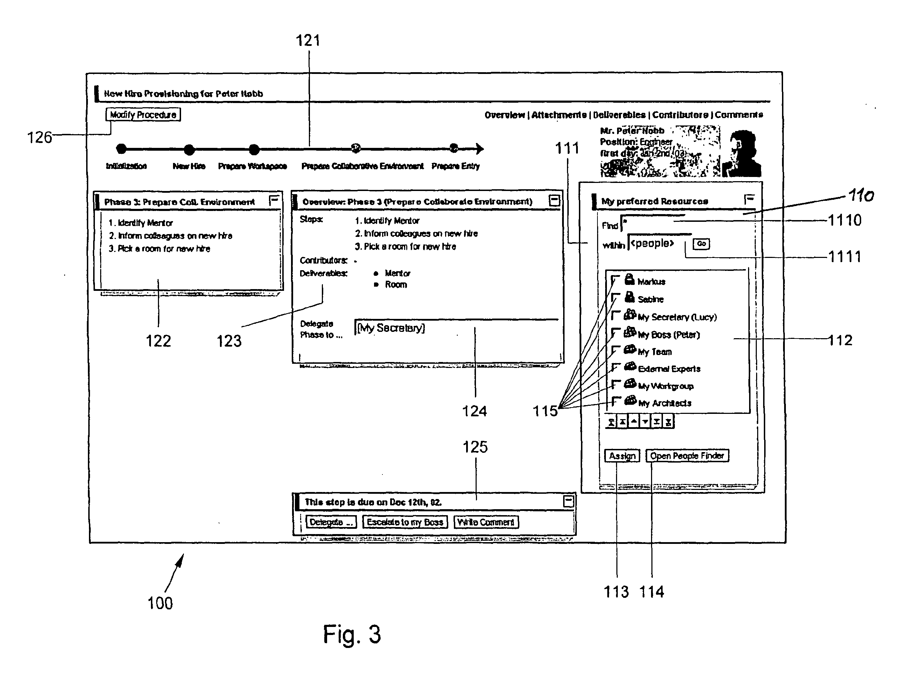

In fig. 3, the graphical program interface 100 is shown in an input state in which an user has activated an input control, in this example a delegate control 124 by means of which the user can assign a task to a person. The graphical selection interface 110 is made visible when the input control is activated and data suitable to be inputted at the activated input control is shown to the user.

In this example, in the graphical selection interface 110 context sensitive data associated with the activated input control is displayed by means of the following process, however the invention is not limited to this specific process and the context sensitive data may likewise be displayed by means of a different process.

When the user activates an input control, input property data representing one or more properties of the activated or selected input control is automatically transmitted to the processor 24. The processor 24 selects input associated data from the database 3 which is associated with one or more of the properties of the input control and suitable to be inserted at the input control. The selected input associated data is then transmitted to the graphical selection interface 110. At the graphical selection interface 110 the selected input associated data are outputted visually, in this example the graphical selection interface 110 comprises a result field 112 in which the selected input associated data are displayed. Data suitable to be inputted at the input control are thus searched and displayed in the graphical selection interface 110 and the ease of use is improved accordingly.

It is likewise possible that one or more lists of suitable data are stored in the memory 25, which data have been pre-selected by an user, e.g. the list contains favourite data, for a specific input field or type of input field. When an input control is activated, a property of the selected control is sent to the processor 24. The processor 24 selects a suitable list and outputs the data in the list in the graphical selection interface 110. Accordingly, after activation of an input control, initially an user is presented with data which the user previously found suitable to be inserted in the input control by, which is convenient to the user.

The graphical selection interface 110 further has select controls 115 via which an user can select data to be inputted at the activated or selected input controls in the graphical program interface 100. The graphical selection interface 110 has an insert control 113 via which the selected data can be inserted in one or more of the activated input controls. For instance in fig. 3 the item 'My Secretary (Lucy)' is selected. Via the insert control 113, the user can insert the selected results in an input control. Thus, in the example of fig. 3 the user select an identifier of a person to which as task is to be delegated and insert this identifier in the delegate control 124 and thereby assign a task to this person.

Unexpectedly, it is found that the computer system in the example is very convenient to use because of the combination of at least the following features. The graphical selection interface provides a data look-up tool which can assist an user in entering data into electronic input fields. Furthermore, the graphical selection interface 110 has the ability to adapt the data which can be inserted in the input control to the context of the activated input control. The system can react to the context of an input control by using a predetermined search query associated with a property of the activated input control. The user defined list of favourite data provides an ability to react to the specific user.

Furthermore, the graphical selection interface 110 allows to select input data in a step-wise approach in which the data is presented to the user in a convenient and comprehensible manner. An user can, for example, first search for suitable data in the predetermined list of favourite data, and then, if none of the favourite data is not suitable, perform a quick search for other data which can be inserted in the activated input control provided by means of the search control 111. If the quick search does not provide suitable data, the user can perform an advanced search using the extensive search control 114. When the user activates the extensive search control, a search program outside the running program represented by means of the graphical program interface 100, is started by the processor 24. The search program is represented in the GUI as a search program interface, by means of which a user can perform an extensive search for suitable data.

The graphical program interface 110 has a search control 111 via which, in addition to the process which is performed by the process 24, an user can perform a user-controlled search in the database 3 for data corresponding to search criteria input specified by the user at the search control 111. The results of the search are then displayed in the result field 112. The user can select one or more of the displayed results by means of the select controls 115 and the insert control 113.

In the example, the processor 24 receives properties of the input control when an input control is activated and selects a predetermined search query associated with one or more of the properties from the memory 25. This search query is then automatically inserted in the search control 111 and used to select data suitable to be inserted in the activated input control. Thus, both the means for automatically searching and the means for manually searching for data suitable to be inserted in the activated input control are combined.

In this example, the search control 111 comprise a find control 1110 via which the user can insert a text string which is to be present in the searched data. The search control further has a type control 1111. The user can specify by means of the type control 1111 that the data has to be of a certain type which corresponds to the type of data to be inserted in the input control. Thus, in the example of fig. 3 only data of the type 'people' is presented in the result field 112 and thus only people data can be inserted in the delegate control 124. If however, the input control would require another type of data, such as types of cars or available room categories, the user can select in the type control 1111 the corresponding data type. Correspondingly only data of those types are then presented in the result field 112.

Additionally, the graphical selection interface 110 has a extensive search control 114, "open people finder", by means of which a user can activate a program outside the graphical program interface 100 with more extensive search capabilities.

In this example, the graphical program interface 100 in fig. 3 is part of a computer program which when running on the computer device 2 guides the user through steps of a process, such as a task to be performed by the user or steps to be performed by the computer system 1 under control of an operator. In this example, the procedure is the hiring of a new employee. The graphical program interface 100 comprises a phase control 121 in which different phases of the process are depicted. The user can select a phase in the phase control 121. In response to the selection of a phase, steps to be taken in that phase are shown in phase interface 122. Thus, in the example of figs. 2-3, the step 'prepare collaborative environment' is selected and in reaction thereto to steps 'identify mentor', 'inform colleagues' and 'pick a room' are shown in the phase interface 122. The user may select a step shown in the phase interface 122, in response to which in overview interface 123 an overview of the selected step is shown.

As is shown in fig. 3, the overview interface 123 is provided with a delegate control 124 via which the user can select a person to which the whole phase or a specific step can be delegated. The graphical program interface 100 is further provided with a modify control 126 via which the user can modify the procedure or a part thereof. Further, an interface 125 is present via which the user can inform his superior, write a comment or confirm that the step of phase is delegated via suitable controls.

In the example, the procedure is the hiring of a new employee, however the graphical program interface 100 may likewise guide through a different procedure such as connecting computers in a computer network and configuring a server for those computer, installing and optimising of new computer software on the computer system 1 or otherwise. The phase control 122 may then, for example, show steps to be performed by a computer system under control of an operator. The operator may then initiate performing the steps via the phase control 122. For example, the steps may be to find a computer connected to a netwerk server, install software from the server on to the server and configure the settings of the computer to allow access by certain users or otherwise. In the overview control settings of each step may then be shown, such that only pre-selected software is installed or otherwise.

The computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output.

To provide for interaction with an user, a computer system can be used having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

The invention may also be implemented in an article of manufacture with a computer usable medium having computer readable instructions embodied therein for providing access to resources available on that computer, the computer readable instructions comprising instructions to cause the computer to perform the steps of a method according to the invention. The invention may also be implemented as a computer program for running on a computer system, at least including code portions for performing steps of a method according to the invention when run on a computer system or enabling a general propose computer system to perform functions of a filter device according to the invention. Such a computer program may be provided on a data carrier, such as a CD-ROM or diskette, stored with data loadable in a memory of a computer system, the data representing the computer program. The data carrier may further be a data connection, such as a telephone cable or a wireless connection transmitting signals representing a computer program according to the invention.

It should be noted that the above-mentioned embodiments illustrate rather than limit the invention, and that those skilled in the art will be able to design alternatives without departing from the scope of the appended claims. For example, in fig. 1 the database 3 is depicted outside the computer device 2, but the database may likewise be present inside the computer device. Also, the computer device 2 and/or the database 3 may be connected to other devices or systems. Furthermore, the computer system may be any device suitable, such as for example a general purpose computer a personal digital assistant or otherwise. In the claims, any reference signs placed between parentheses shall not be construed as limiting the claim. The word 'comprising' does not exclude the presence of other elements or steps than those listed in a claim. The mere fact that certain measures are recited in mutually different claims does not indicate that a combination of these measures cannot be used to advantage.

## Claims

1. A computer system (1) comprising a user-interface, which user-interface comprises:
a graphical program interface (100) having at least one input control (124) arranged for inputting data into the computer system (1), which graphical program interface (100) further comprises:
- means for selecting input associated data from a database (3) associated with one or more of the properties of the input control (124),
- a graphical selection interface (110) comprising at least one select control (115) arranged for: selecting data suitable to be inputted at selected input controls (124) and inputting said selected data in the selected input control (124) as inputting data;
the computer system (1) further comprising a processor communicatively connected to the graphical program interface (100), which processor is arranged for:
- automatically determining at least one property of the selected input control (124) in response to selecting at least one of said input controls (124);
- selecting data associated with said property, and
- displaying the selected data at the graphical selection interface (110);
wherein the graphical selection interface (110) further comprises:
- at least one search control (111) having a search input (1110,1111), which search control (111) is arranged for searching for data satisfying at least one user-specified search criterion inputted at the search input (1110,1111); and
- a result field (112) for displaying data representing search results satisfying said at least one search criterion;
- wherein the select control (115) can select at least one of said data representing search results;
wherein the processor is further arranged for selecting at least one search criterion associated with said property and inputting the search criterion at the search input (1110,1111) of the search control (111);
wherein the search control (111) comprises a type control (1111) for selecting a data type corresponding to a data type to be inputted at the input control (124), and
wherein only data is displayed in the result field (112) which corresponds to the selected data type.

2. A computer system (1) as claimed in claim 1, wherein selecting data associated with said property comprises:
selecting a predetermined list of data suitable to be inputted in at the input control (124), which list associated with said property of the input control (124).

3. A computer system (1) as claimed in claim 1 or 2, further comprising an extensive search control (114) arranged for activating a search program interface outside the graphical program interface (100).

4. A method for inputting data in a computer system (1), comprising:
providing a graphical program interface (100) at an user-interface of the computer system (1), which graphical program interface (100) has at least one input control (124) for inputting data into the computer system (1), which graphical program interface (100) further comprises a graphical selection interface (110) having at least one select control (115); selecting input associated data from a database (3) associated with one or more of the properties of the input control (124),
selecting at least one of said input controls (124);
displaying data in the graphical selection interface (110), which displayed data is suitable to be inputted at the selected input controls (124);
selecting from said displayed data by means of at least one of the select controls (115) data;
inputting said selected data at the input control (124) as inputting data;
automatically determining at least one property of the selected input control (124) in response to selecting at least one of said input controls (124);
selecting data associated with said property, and
displaying the selected data at the graphical selection interface (110);
wherein the graphical selection interface (110) further comprises:
- at least one search control (111) having a search input (1110,1111), which search control (111) is arranged for searching for data satisfying at least one user-specified search criterion inputted at the search input (1110,1111), and
- a result field (112) for displaying data representing search results satisfying said at least one search criterion,
- wherein the select control (115) can select at least one of said data representing search results; the method further comprising:
selecting at least one search criterion associated with said property,
inputting the search criterion at the search input (1110,1111) of the search control (111);
wherein the search control (111) comprises a type control (1111) for selecting a data type corresponding to a data type to be inputted at the input control (124), and
wherein only data is displayed in the result field (112) which corresponds to the selected data type.

5. A computer program product, comprising program code portions for performing steps of a method as claimed in claim 4 when run on a programmable apparatus.

6. An article of manufacture with a computer usable medium having computer readable instructions embodied therein for providing access to resources available on that computer, the computer readable instructions comprising instructions to cause the computer to perform the steps of a method as claimed in claim 4.

## Patentansprüche

1. Ein Computersystem (1), das eine Benutzerschnittstelle umfasst, wobei diese Benutzerschnittstelle Folgendes umfasst:
eine grafische Programmschnittstelle (100), die mindestens eine Eingabesteuerung (124) aufweist, die zur Eingabe von Daten in das Computersystem (1) eingerichtet ist, wobei diese grafische Programmschnittstelle (100) des Weiteren Folgendes umfasst:
- Mittel zur Selektion von eingabeassoziierten Daten aus einer Datenbank (3), assoziiert mit einer oder mehreren aus den Eigenschaften der Eingabesteuerung (124),
- eine grafische Selektionsoberfläche (110), die mindestens eine Selektionssteuerung (115) umfasst, die zu Folgendem eingerichtet ist: Daten selektieren, die zur Eingabe bei den selektierten Eingabesteuerungen (124) geeignet sind, und eingeben der genannten selektierten Daten in die selektierten Eingabesteuerungen (124) als Eingabedaten;
wobei das Computersystem (1) des Weiteren einen Prozessor umfasst, der auf kommunizierende Weise an die grafische Programmschnittstelle (100) angeschlossen ist, wobei dieser Prozessor zu Folgendem eingerichtet ist:
- automatisch bestimmen von mindestens einer Eigenschaft der selektierten Eingabesteuerung (124) als Antwort auf das Selektieren von mindestens einer der genannten Eingabesteuerungen (124);
- selektieren von Daten, die mit dieser Eigenschaft assoziiert sind, und
- anzeigen der selektierten Daten bei der grafischen Selektionsoberfläche (110); wobei die grafische Selektionsoberfläche (110) des Weiteren Folgendes umfasst:
- mindestens eine Suchsteuerung (111), die eine Sucheingabe (1110, 1111) aufweist, wobei diese Suchsteuerung (111) eingerichtet ist, um nach Daten zu suchen, die mindestens ein benutzerdefiniertes Suchkriterium erfüllen, das in die Sucheingabe (1110, 1111) eingegeben worden ist; und
- ein Ergebnisfeld (112) zur Anzeige von Daten, die Suchergebnisse darstellen, die das genannte mindestens eine benutzerdefinierte Suchkriterium erfüllen;
- wobei die genannte Selektionssteuerung (115) mindestens ein Datenelement unter den genannten Daten selektieren kann, die Suchergebnisse darstellen;
wobei der Prozessor des Weiteren eingerichtet ist, um mindestens ein Suchkriterium zu selektieren, das der genannten Eigenschaft zugehörig ist, und um das Suchkriterium in die Sucheingabe (1110, 1111) der Suchsteuerung (111) einzugeben;
wobei die Suchsteuerung (111) eine Typensteuerung (1111) umfasst, um einen Datentyp zu selektieren, der einem bei der Eingabesteuerung (124) einzugebenden Datentyp entspricht, und
wobei nur Daten im Ergebnisfeld (112) angezeigt werden, die dem selektierten Datentyp entsprechen.

2. Ein Computersystem (1) nach Anspruch 1, wobei das Selektieren der Daten, die mit der genannten Eigenschaft assoziiert sind, Folgendes umfasst:
selektieren einer vorbestimmten Liste von Daten, die geeignet sind, bei der Eingabesteuerung (124) eingegeben zu werden, wobei diese Liste mit der genannten Eigenschaft der Eingabesteuerung (124) assoziiert ist.

3. Ein Computersystem (1) nach Anspruch 1 oder 2, das des Weiteren eine Steuerung (114) für eine umfassende Suche umfasst, die zur Aktivierung einer Such-Programmschnittstelle außerhalb der grafischen Programmschnittstelle (100) eingerichtet ist.

4. Ein Verfahren zur Eingabe von Daten in ein Computersystem (1), das Folgendes umfasst:
bereitstellen einer grafischen Programmschnittstelle (100) an einer Benutzerschnittstelle des Computersystems (1), wobei diese grafische Programmschnittstelle (100) mindestens eine Eingabesteuerung (124) aufweist, um Daten in das Computersystem (1) einzugeben, wobei diese grafische Programmschnittstelle (100) des Weiteren eine grafische Selektionsoberfläche (110) umfasst, die mindestens eine Selektionssteuerung (115) umfasst;
selektieren von eingabeassoziierten Daten aus einer Datenbank (3), assoziiert mit einer oder mehreren aus den Eigenschaften der Eingabesteuerung (124),
selektieren von mindestens einer der genannten Eingabesteuerungen (124);
anzeigen von Daten in der grafischen Selektionsoberfläche (110), wobei diese angezeigten Daten dazu geeignet sind, bei den genannten Eingabesteuerungen (124) eingegeben zu werden;
selektieren aus den genannten angezeigten Daten mittels mindestens einem der Selektionssteuerungs (115)-Daten;
eingeben der genannten angezeigten Daten an der Eingabesteuerung (124) als einzugebende Daten;
automatisch bestimmen von mindestens einer Eigenschaft der selektierten Eingabesteuerung (124) als Antwort auf das Selektieren von mindestens einer der genannten Eingabesteuerungen (124);
selektieren von Daten, die mit dieser Eigenschaft assoziiert sind, und
anzeigen der selektierten Daten bei der grafischen Selektionsoberfläche (110); wobei die grafische Selektionsoberfläche (110) des Weiteren Folgendes umfasst:
- mindestens eine Suchsteuerung (111), die eine Sucheingabe (1110, 1111) aufweist, wobei diese Suchsteuerung (111) eingerichtet ist, um nach Daten zu suchen, die mindestens ein benutzerdefiniertes Suchkriterium erfüllen, das in die Sucheingabe (1110, 1111) eingegeben worden ist; und
- ein Ergebnisfeld (112) zur Anzeige von Daten, die Suchergebnisse darstellen, die das genannte mindestens eine benutzerdefinierte Suchkriterium erfüllen;
- wobei die genannte Selektionssteuerung (115) mindestens ein Datenelement unter den genannten Daten selektieren kann, die Suchergebnisse darstellen; wobei das Verfahren des Weiteren Folgendes umfasst:
selektieren von mindestens einem Suchkriterium, das der genannten Eigenschaft zugehörig ist,
eingeben des Suchkriteriums bei der Sucheingabe (1110, 1111) der Suchsteuerung (111);
wobei die Suchsteuerung (111) eine Typensteuerung (1111) umfasst, um einen Datentyp zu selektieren, der einem bei der Eingabesteuerung (124) einzugebenden Datentyp entspricht, und
wobei nur Daten im Ergebnisfeld (112) angezeigt werden, die dem selektierten Datentyp entsprechen.

5. Ein Computerprogrammprodukt, das Programmcodeabschnitte umfasst, die Schritte eines Verfahrens nach Anspruch 4 durchführen, wenn sie in einer programmierbaren Vorrichtung ausgeführt werden.

6. Ein Herstellungserzeugnis mit einem computergeeigneten Träger, in dem computerlesbare Anweisungen verkörpert sind, um Zugang zu auf diesem Computer verfügbare Ressourcen zu schaffen, wobei die computerlesbaren Anweisungen Anweisungen umfassen, um den Computer dazu zu veranlassen, die Schritte eines Verfahrens nach Anspruch 4 durchzuführen.

## Revendications

1. Un système informatique (1) comprenant une interface utilisateur, laquelle interface utilisateur comprend :
une interface graphique de programme (100) présentant au moins une commande d'entrée (124) agencée pour introduire des données dans le système informatique (1), laquelle interface graphique de programme (100) comprenant en outre :
- des moyens pour sélectionner, à partir d'une base de données (3), des données associées à l'entrée, associées à une ou plusieurs propriétés de la commande d'entrée (124),
- une interface graphique de sélection (110) comprenant au moins une commande de sélection (115) agencée pour : sélectionner des données convenant à être introduites auprès des commandes d'entrée (124) sélectionnées, et introduire lesdites données sélectionnées dans la commande d'entrée (124) sélectionnée en tant que données d'entrée ;
le système informatique (1) comprenant en outre un processeur connecté de façon communicante à l'interface graphique de programme (100), lequel processeur étant agencé pour :
- déterminer automatiquement au moins une propriété de la commande d'entrée (124) sélectionnée en réponse au fait de sélectionner au moins une parmi lesdites commandes d'entrée (124) ;
- sélectionner des données associées à ladite propriété, et
- afficher les données sélectionnées auprès de l'interface graphique de sélection (110);
sachant que l'interface graphique de sélection (110) comprend en outre :
- au moins une commande de recherche (111) présentant une entrée de recherche (1110, 1111), laquelle commande de recherche (111) est agencée pour rechercher des données répondant à au moins un critère de recherche spécifié par l'utilisateur introduit auprès de l'entrée de recherche (1110, 1111) ; et
- un champ résultat (112) pour afficher des données représentant des résultats de recherche répondant à au moins un critère de recherche nommé ;
- sachant que la commande de sélection (115) est en mesure de sélectionner au moins une parmi lesdites données représentant les résultats de recherche ;
sachant que le processeur est en outre agencé pour sélectionner au moins un critère de recherche associé à ladite propriété, et introduire le critère de recherche auprès de l'entrée de recherche (1110, 1111) de la commande de recherche (111) ;
sachant que la commande de recherche (111) comprend une commande de type (1111) pour sélectionner un type de donnée correspondant à un type de donnée à introduire auprès de la commande d'entrée (124), et
sachant qu'uniquement des données, qui correspondent au type de données sélectionné, sont affichées dans le champ résultat (112).

2. Un système informatique (1) d'après la revendication 1, sachant que le fait de sélectionner des données associées à ladite propriété comprend le fait de :
sélectionner une liste prédéterminée de données appropriées en vue de leur introduction auprès de la commande d'entrée (124), laquelle liste étant associée à ladite propriété de la commande d'entrée (124).

3. Un système informatique (1) d'après la revendication 1 ou 2, comprenant en outre une commande de recherche approfondie (114) agencée pour activer une interface de programme de recherche à l'extérieur de l'interface graphique de programme (100).

4. Un procédé pour introduire des données dans un système informatique (1), comprenant le fait de :
fournir une interface graphique de programme (100) auprès d'une interface utilisateur du système informatique (1), laquelle interface graphique de programme (100) présentant au moins une commande d'entrée (124) pour introduire des données dans le système informatique (1), laquelle interface graphique de programme (100) comprenant en outre une interface graphique de sélection (110) comprenant au moins une commande de sélection (115) ;
sélectionner à partir d'une base de données (3) des données associées à l'entrée, associées à une ou plusieurs propriétés de la commande d'entrée (124),
sélectionner au moins une parmi lesdites commandes d'entrée (124) ;
afficher les données sélectionnées dans l'interface graphique de sélection (110), lesquelles données affichées convenant à être introduites auprès des commandes d'entrée (124) sélectionnées ;
sélectionner parmi lesdites données affichées au moyen d'au moins une des données de la commande de sélection (115) ;
introduire lesdites données sélectionnées auprès de la commande d'entrée (124) en tant que données d'entrée ;
déterminer automatiquement au moins une propriété de la commande d'entrée (124) sélectionnée en réponse au fait de sélectionner au moins une parmi lesdites commandes d'entrée (124) ;
sélectionner des données associées à ladite propriété, et
afficher les données sélectionnées auprès de l'interface graphique de sélection (110);
sachant que l'interface graphique de sélection (110) comprend en outre :
- au moins une commande de recherche (111) présentant une entrée de recherche (1110, 1111), laquelle commande de recherche (111) est agencée pour rechercher des données répondant à au moins un critère de recherche spécifié par l'utilisateur introduit auprès de l'entrée de recherche (1110, 1111) ; et
- un champ résultat (112) pour afficher des données représentant des résultats de recherche répondant à au moins un critère de recherche nommé ;
- sachant que la commande de sélection (115) est en mesure de sélectionner au moins une parmi lesdites données représentant les résultats de recherche ; le procédé comprenant en outre le fait de :
sélectionner au moins un critère de recherche associé à ladite propriété,
introduire le critère de recherche auprès de l'entrée de recherche (1110, 1111) de la commande de recherche (111);
sachant que la commande de recherche (111) comprend une commande de type (1111) pour sélectionner un type de donnée correspondant à un type de donnée à introduire auprès de la commande d'entrée (124), et
sachant qu'uniquement des données, qui correspondent au type de données sélectionné, sont affichées dans le champ résultat (112).

5. Un produit programme informatique, comprenant des parties de code de programme pour effectuer les étapes d'un procédé d'après la revendication 4 quand elles sont lancées dans un dispositif programmable.

6. Article manufacturé avec un support utilisable par ordinateur présentant des instructions lisibles par ordinateur incorporées dedans permettant d'accéder à des ressources disponibles sur cet ordinateur, les instructions lisibles par ordinateur comprenant des instructions pour amener l'ordinateur à effectuer les étapes d'un procédé d'après la revendication 4.
